# EUROPEAN PATENT SPECIFICATION

(11) **EP 1 358 037 B1**
(45) Date of publication and mention of the grant of the patent: **15.07.2009**
(21) Application number: 02710914.9
(22) Date of filing: 25.01.2002
(51) Int. Cl.: B23K 33/00

(54) **JOINT FOR METAL OBJECTS**
VERBINDUNG FÜR METALLOBJEKTE
JOINT POUR OBJETS METALLIQUES

(30) Priority: 31.01.2001 FI 20010182
(43) Date of publication of application: 05.11.2003
(73) Proprietor: Outokumpu Oyj, 02200 Espoo (FI)
(72) Inventor: TORVINEN, Terho, FIN-67700 Kokkola (FI)
(74) Representative: Zipse Habersack Kritzenberger
(86) International application number: PCT/FI2002/000060
(87) International publication number: WO 2002/060637

(56) References cited:
- DE-A1- 19 703 996
- US-A- 5 456 405

## Description

The present invention relates to a joint between three-dimensional metal objects, which joint can be utilized when joining metal objects together.

A two-dimensional metal object, such as a metal plate, can be joined to another similar metal object in many different ways, for instance with a butt joint, with a butt joint with cover plate, or with a folded joint. In addition, all of said joining methods also have various different ways for realizing the joint, depending on the mutual positions of the metal objects to be joined together. A joining method combined of said methods can also be used, for example a keyed joint. Even a three-dimensional metal object, such as a metal tube or a three-dimensional shaped object can be joined to another similar metal object in many different ways, for instance with a butt joint, a socket joint, a bell butt joint, a spigot joint or a sleeve joint. In similar fashion as in the case of metal plates, also the joining methods of metal tubes have many different ways for realizing the joint, and they are named according to the mutual positions of the metal objects to be joined together.

The joining of products made of a two-dimensional metal object, such as a metal plate, or of a three-dimensional metal object, such as metal tube or a three-dimensional shaped object, with a butt joint is problematic, in case the high standard for precision in the joint should be fulfilled. When joining two-dimensional and three-dimensional metal objects together with a butt joint, the aim as regards accuracy is to achieve a so-called zero groove, in which case the facing surfaces of the metal objects to be joined together are placed at equal distances from each other essentially throughout the whole junction surface. However, when metal objects are mechanically cut, the obtained cutting surface of the metal object is not geometrically feasible, but part of the cutting surface is lacking material. The required standard for the fitting with beam welding methods is of the order 0.1 mm.

In prior art it has been known according to DE 197 03 996 A1 to join two plates having parallel edges to obtain a welded butt-joint without any welding addition. To bring the parallel edges of the plates into contact, a pressure element is therefore provided, which presses or moves one edge vertically with respect to the other edge. Further, it has been known according to US 5,456,405 to provide a seamless connection of two plates, which are afterwards formed to a hollow tube. A bevelled connection is provided to ensure that a flat plate of sufficient length can be produced, which leads afterwards to a tube of the desired length with a normal welding seam in the longitudinal direction.

The object of the present invention is to eliminate some of the drawbacks of the prior art and to realize an improved joint used in the butt joining of three-dimensional metal objects. The essential novel features of the invention are enlisted in the appended claims.

According to the invention, at the edge of a three-dimensional metal object, such as a metal tube or a three-dimensional shaped piece, there is formed, in order to join said metal object to another similar metal object by a butt joint, a self-directing fitting, where the cutting angle in relation to the metal object edge varies within the range 0 - 60 degrees, advantageously within the range 20 - 30 degrees. By means of the self-directing fitting, the edge of the metal object is beveled so that when joining the metal object to another similar metal object, the metal object edge forms, in order to obtain an essentially precise joint for the counterpiece to be joined thereto by a butt joint, a control surface between two three-dimensional metal objects to be joined together.

By employing a butt joint between three-dimensional metal objects to be joined together, the joining expenses can be essentially reduced, because the metal objects to be joined by a butt joint need not be bent in relation to each other, as is the case for instance in a folded joint of metal plates or in a bell butt joint of metal tubes. When employing a butt joint, it is not necessary to provide a fastening device that should guide the butt joint edges to match. In addition, with a butt joint, it is not necessary to install a joining piece that is separate from the metal objects to be joined together, as is the case for example in a keyed lock joint of metal plates or in a sleeve joint of metal tubes. In a butt joint, the joining of two metal objects is carried out by placing the edges of the metal objects against each other, so that the edges are located at an equal distance essentially throughout the whole joint area.

The joint according to the invention, used in the butt joining of three-dimensional metal objects, is achieved by beveling a self-directing fitting at the joining edge, by means of which fitting the metal objects to be joined are arranged in an overlapping fashion throughout the whole joining surface. When the size of the cutting angle used in the beveling process fluctuates within the range of 0 - 60 degrees, advantageously 20 - 30 degrees, the fitting provided between the metal objects is made essentially stepless in the vertical direction of the edge provided with the fitting, when the metal objects are arranged in a horizontal position, and said fitting is made essentially gapless in the longitudinal and transversal directions of the edge provided with the fitting. In three-dimensional metal objects, the controlling of the self-directing fitting is carried out at the receding side of the edge.

When creating a joint according to the invention between three-dimensional metal objects, the beveling of the metal object edges is advantageously performed in cycles, so that during one cycle, only parallel bevels are made in the metal objects, whereas during the next cycle, there are made bevels in the opposite direction. Thus the beveling of the metal object edges can be advantageously speeded up, because it is not necessary to adjust the set values of the beveling tool during the cycles.

In the beveling of the joint according to the invention in three-dimensional metal objects, there is advantageously applied a cutting method utilizing laser beams. According to the invention, by adjusting the cutting angle of the laser beam, it is possible to avoid the prior art type bevels that prevent the making of an advantageous butt joint with a sufficient precision.

The invention is described in more detail below with reference the appended drawings, where
figure 1 illustrates a preferred embodiment of the invention for a three-dimensional metal object, where the metal objects to be joined are separate,
figure 2 illustrates a preferred embodiment according to figure 1, where the metal objects are joined together,
figure 3 illustrates a third preferred embodiment of the invention for a three-dimensional metal object, seen from the direction X,
figure 4 illustrates a preferred embodiment according to figure 3, seen from the direction Y, and
figure 5 illustrates a preferred embodiment according to figure 3, seen from the direction Z,
figure 6 illustrates the cutting angle of an embodiment according to figure 3 as a function of the circular angle, and
figure 7 illustrates the cutting angle of the preferred embodiment according to figure 3 at various spots of the metal object to be beveled,
figure 8 illustrates yet another preferred embodiment of the invention for three-dimensional metal objects, when the metal objects to be joined are separate, and
figure 9 illustrates yet another preferred embodiment of the invention for three-dimensional metal objects, when the metal objects to be joined are separate.

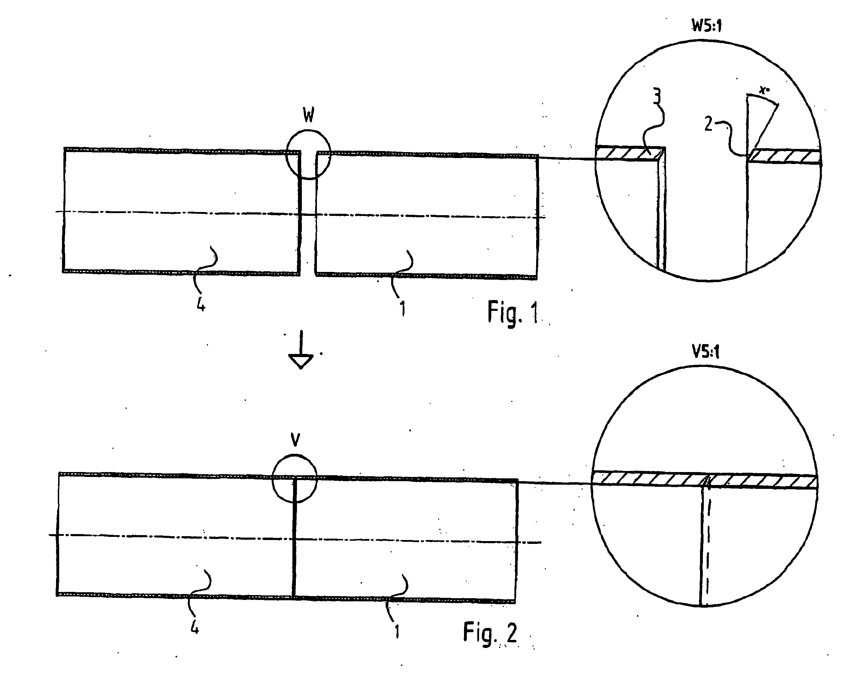

In figures 1 and 2, in order to create a joint with a single-sided control between two metal tubes with essentially equal diameters, at the edge of the metal tube 1, there is made a bevel 2 with a cutting angle of 30 degrees, and the countersurface 3 of said bevel is made with the same cutting angle 30 degrees in the other metal tube 4, so that according to figure 2, the metal tubes 1 and 4 form a uniform butt joint.

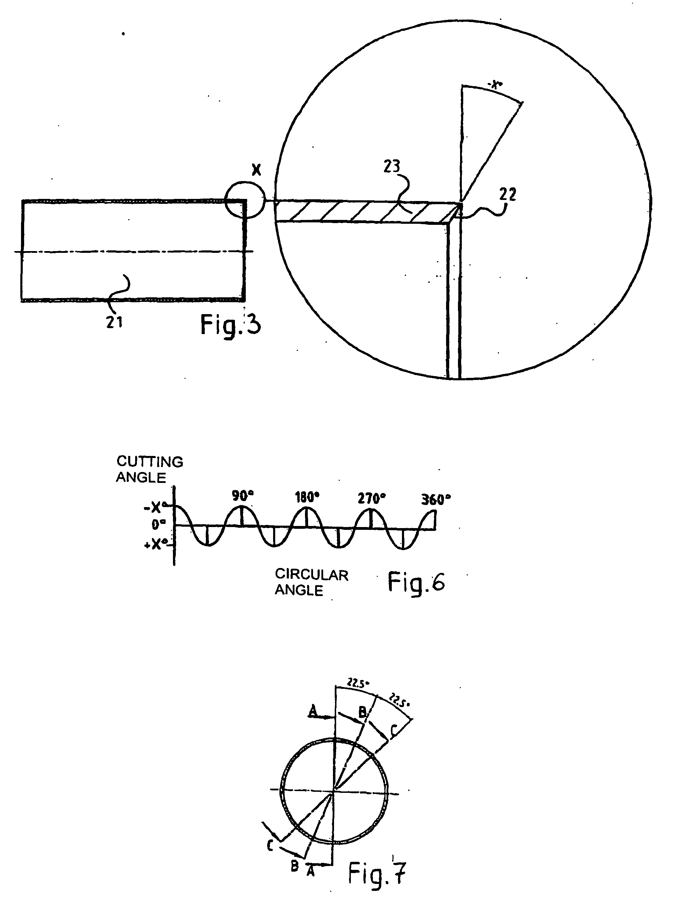

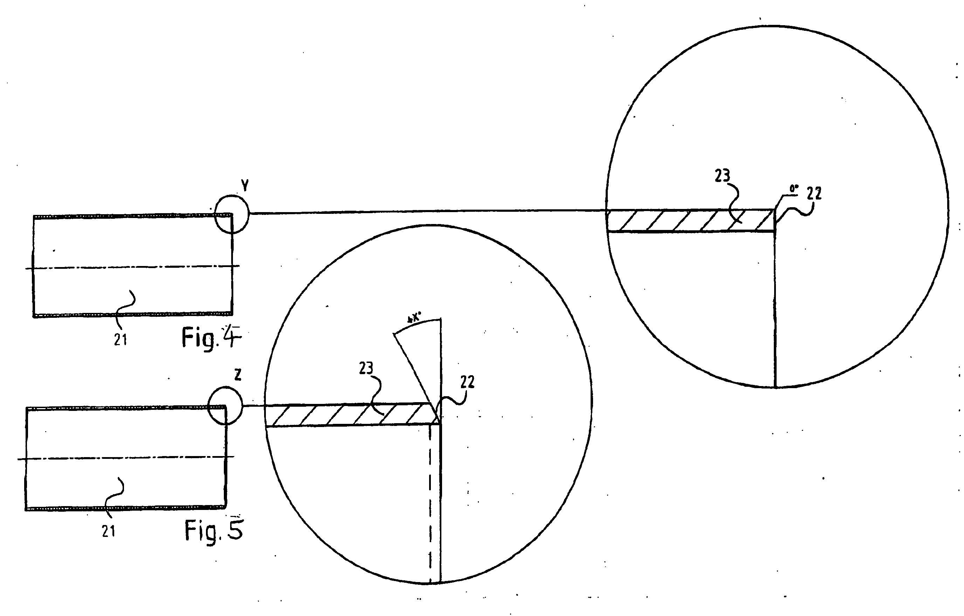

In figures 3 - 7, illustrating how a joint with a two-sided control is created in a metal tube 21, at the edge of the metal tube 21 there is made, with a cutting angle that fluctuates within the range -22,5 - +22,5 degrees a bevel 22, the position of which in relation to the various axles is illustrated in figures 3 - 5. Thus the total cutting angle is 45 degrees. From figures 3 - 5 it is observed that when the cutting angle thus fluctuates, part of the bottom edge of the bevel 22 is made internally at the metal tube edge 23, part is made at the edge 23 and part externally with respect to the metal tube edge 23.

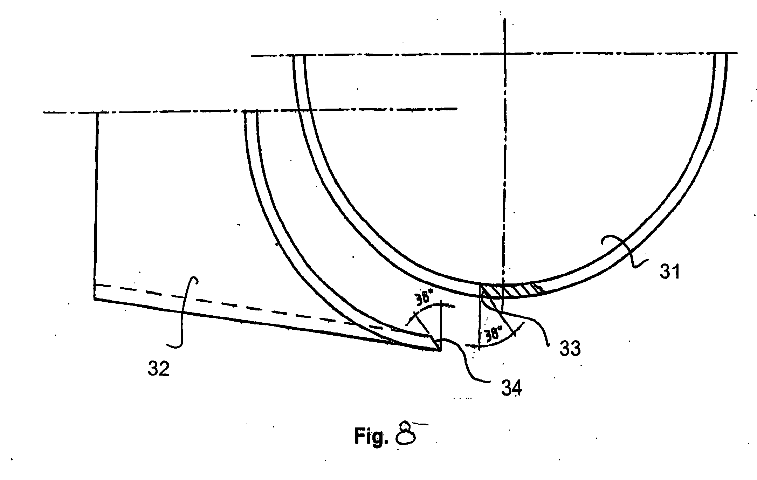

In figure 8, in the metal tube 31 there is formed a self-directing fitting 33 with a cutting angle of 38 degrees. A corresponding self-directing fitting 34 is made in the counterpiece of the metal tube 31, i.e. in the three-dimensional shaped piece 32.

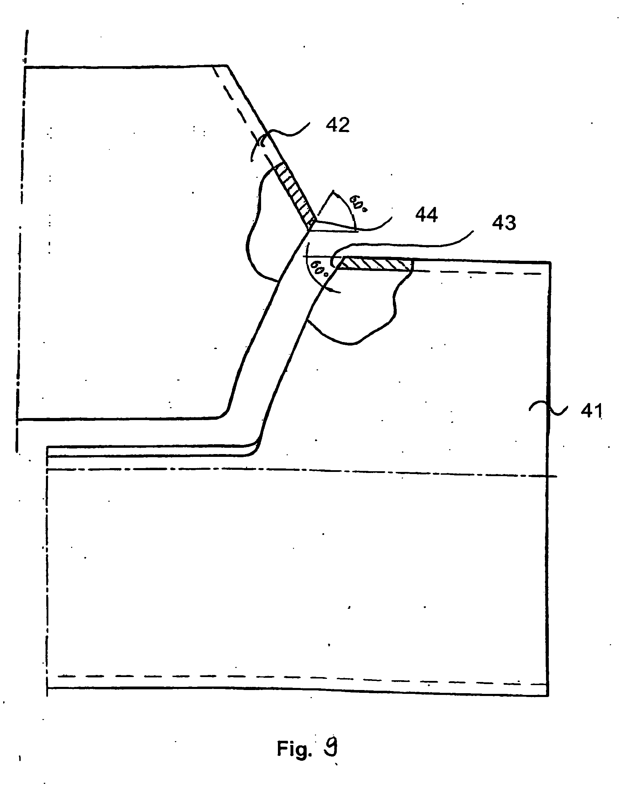

Figure 9 illustrates two three-dimensional shaped pieces 41 and 42, at the edges of which there are formed self-directing fittings 43 and 44 with a cutting angle of 60 degrees.

## Claims

1. A joint between a metal tube and another metal object by a butt joint, **characterized in that** at the edge of said tube (1,11,21,31,41) there is bevelled a self-directing fitting (2,12,22,33,43) where the cutting angle in relation to the metal object edge varies within the range 0-60 degrees, advantageously within the range 20-30 degrees, and that at the edge of the metal object (4,14,31,41) there is created a countersurface (3,13,34,44) for the fitting, so that the bevelled surface of the fitting (2,12,22,33,43) and the countersurface (3,13,34,44) are essentially parallel to each other essentially throughout the whole area of the joint.

2. A joint according to claim 1, **characterized in that** the metal object (11) provided with the joint is two-dimensional.

3. A joint according to any of the preceding claims, **characterized in that** the metal object (1,21,31,41) provided with the joint is three-dimensional.

4. A joint according to any of the preceding claims, **characterized in that** the self-directing fitting (2,3; 12,13; 22; 33,34; 43,44) bevelled at the edge of the metal object (1,11,21; 4,14; 31,32; 41,42) is made by laser cutting.

## Patentansprüche

1. Stumpfstoßverbindung zwischen einem Metallrohr und einem anderen Metallobjekt, **dadurch gekennzeichnet, dass** der Rand des Rohres (1, 11, 21, 31, 41) zu einem sich selbst ausrichtenden Passsitz (2, 12, 22, 33, 43) abgeschrägt ist, wobei der Schnittwinkel relativ zum Rand des Metallobjekts im Bereich von 0 - 60° variiert, vorteilhaft in dem Bereich von 20 - 30°, und dass am Rand des Metallobjekts (4, 14, 31, 41) eine Gegenfläche (3, 13, 34, 44) für den Passsitz gebildet ist, so dass die abgeschrägte Fläche des Passsitzes (2, 12, 22, 33, 43) und die Gegenfläche (3, 13, 34, 44) über im Wesentlichen den gesamten Bereich der Verbindung im Wesentlichen parallel zueinander sind.

2. Verbindung gemäß Anspruch 1, **dadurch gekennzeichnet, dass** das mit der Verbindung versehene Metallobjekt (11) zweidimensional ist.

3. Verbindung nach einem der vorangehenden Ansprüche, **dadurch gekennzeichnet, dass** das mit der Verbindung versehene Metallobjekt (1, 21, 31, 41) dreidimensional ist.

4. Verbindung nach einem der vorangehenden Ansprüche, **dadurch gekennzeichnet, dass** der zu einem selbstausrichtenden Passsitz (2, 3; 12, 13; 22; 33, 34; 43, 44) abgeschrägte Rand des Metallobjekts (1, 11, 21; 4, 14; 31, 32; 41, 42) durch einen Laserschnitt gefertigt ist.

## Revendications

1. Joint entre un tube métallique et un autre objet métallique par un joint d'about, **caractérisé par le fait qu'**un raccord à auto-positionnement biseauté (2, 12, 22, 33, 43) est créé sur le bord dudit tube (1, 11, 21, 31, 41), où l'angle de coupe par rapport à l'objet métallique varie de l'ordre de 0 à 60 degrés, avantageusement de l'ordre de 20 à 30 degrés, et qu'une surface opposée est créée (3, 13, 34, 44) pour le raccord sur le bord de l'objet métallique (4, 14, 31, 41), de telle sorte que la surface biseautée du raccord (2, 12, 22, 33, 43) et la surface opposée (3, 13, 34, 44) sont essentiellement parallèles entre elles sensiblement à travers toute la zone du joint.

2. Joint selon la revendication 1,
**caractérisé par le fait que** l'objet métallique (11) muni du joint est bidimensionnel.

3. Joint selon l'une des revendications précédentes,
**caractérisé par le fait que** l'objet métallique (1, 21, 31, 41) muni du joint est tridimensionnel.

4. Joint selon l'une des revendications précédentes,
**caractérisé par le fait que** le raccord à auto-positionnement (2, 3; 12, 13; 22; 33, 34; 43, 44) biseauté sur le bord de l'objet métallique (1, 11,21; 4,14; 31,32; 41,42) est effectué par découpe laser.
